# EUROPÄISCHE PATENTANMELDUNG

(11) **EP 0 693 511 A1**
(43) Veröffentlichungstag der Anmeldung: **24.01.1996**
(21) Anmeldenummer: 95110708.5
(22) Anmeldetag: 10.07.1995
(51) Int. Cl.: C08G 18/76, C08G 18/10, C08G 18/42, C09J 175/04

(54) **Isocyanatgruppen enthaltende reaktive Hotmeltsysteme**

(30) Priorität: 22.07.1994 DE 4426130
(71) Anmelder: BAYER AG, D-51368 Leverkusen (DE)
(72) Erfinder: Meckel, Walter, Dr., D-41468 Neuss (DE); Hänsel, Eduard, Dr., D-40767 Langenfeld (DE); Ganster, Otto, Dr., D-51519 Odenthal (DE); Büchner, Jörg, D-51467 Bergisch Gladbach (DE)

(57) **Zusammenfassung**

Isocyanatgruppen enthaltende, reaktive Hotmeltsysteme auf Basis von Hydroxypolyolen mit Ester- und/oder Ethergruppierungen der Hydroxylzahl 15 bis 150 und einer mittleren Funktionalität von 1,95 bis 2,2 und Diphenylmethandiisocyanaten in einem Verhältnis von Isocyanatgruppen in den Diphenylmethandiisocyanaten zu Hydroxylgruppen in den Polyolen von 1,4:1 bis 2,5:1, die einen Gehalt von mindestens 70 Gew.-% an 2,4'-Diphenylmethandiisocyanat besitzen, zeichnen sich durch eine niedrige Anfangsviskosität und einer erhöhten Temperaturstabilität aus und eignen sich als Fest-Klebstoffe für die verschiedensten Einsatzgebiete.

## Beschreibung

Die Erfindung betrifft Isocyanatgruppen-haltige, reaktive Hotmeltsysteme mit niedriger Anfangsviskosität und erhöhter Temperaturstabilität aus Hydroxypolyolen mit Ester- und/oder Ethergruppierungen und speziellen Diphenylmethandiisocyanaten sowie ihre Verwendung als Klebstoffe in den verschiedensten Einsatzgebieten.

Fügeverfahren mit lösemittelfreien, 100 % Feststoff enthaltenden Klebstoffsystemen gewinnen in der heutigen Zeit immer mehr an Bedeutung, da die Verwendung von lösemittelhaltigen Systemen aufwendige Lösemittelrückgewinnungsanlagen erfordern und die Verwendung von wäßrigen Dispersions- oder Lösungssystemen eine Abdunstung des Wassers erfordert, was ebenfalls sehr kostenintensiv ist. Als technische Alternative bieten sich Schmelzklebstoffe an, die seit langem bekannt sind. Ihre Vorteile bestehen darin, daß sie, als heiße Schmelzen aufgetragen, rasch beim Abkühlen erstarren und damit Festigkeit aufbauen. Ein Nachteil besteht darin, daß bedingt durch die hohen Schmelztemperaturen das VerKleben von temperaturempfindlichen Substraten erschwert ist, und da der aufgetragene Klebstoff, wenn er nicht sofort weiterverarbeitet wird, durch die rasche Verfestigung in einen nicht mehr benetzenden Zustand übergeht, der nur noch unter extremen Temperaturbedingungen thermisch aktiviert werden kann, und außerdem der Verbund, bedingt durch den thermoplastischen Charakter des Hotmelts, eine begrenzte Wärmestandsfestigkeit aufweist.

Eine elegante Art, die Eigenschaft von Schmelzklebstoffen, nämlich beim Abkühlen Festigkeit aufzubauen und gleichzeitig bei tiefen Temperaturen anwendbar zu sein, aber doch Klebungen guter Wärmefestigkeit zu geben, ist ein im Prinzip in der DE-OS 2 609 266 beschriebenes Fügeverfahren mit reaktiven Hotmeltsystemen auf Basis von Isocyanat-haltigen Prepolymeren aus Diisocyanaten und Polyesterdiolen mit Schmelzbereichen oberhalb 40°C. Auf Grund der niedrigen Molekulargewichte sind die Produkte bei Temperaturen wenig oberhalb des Schmelzbereiches der Polyester flüssig und verarbeitbar. Sie erreichen nach einer auf dem Substrat ablaufenden Kettenverlängerungsreaktion ein ausreichendes Molekulargewicht, das zusammen mit der Rekristallisation der kristallinen Polyesterkettensegmente eine erhöhte Anfangsfestigkeit ergibt. Die Endfestigkeit wird dabei durch vollständige Reaktion der noch vorhandenen freien Isocyanatgruppen mit beispielsweise Luftfeuchtigkeit unter Ausbildung von linearen, hochmolekularen Polyurethanpolyharnstoffen erreicht.

Das Ausbalancieren der Eigenschaft der möglichst hohen Anfangsfestigkeit mit der möglichst niedrigen Applikations- bzw. Aufschmelztemperatur der reaktiven Hotmeltsysteme ist noch nicht zur vollen Zufriedenheit gelöst: die Isocyanatgrupen enthaltenden Systeme werden bei den für die Auftragsviskosität erforderlichen erhöhten Temperaturen, auch bei Ausschluß von Luftfeuchtigkeit zunehmend instabil, was sich in einer stark ansteigenden Viskosität, im Extremfall durch eine Gelierung der Schmelze bemerkbar macht. Dies führt zu Anbackungen in den Aufschmelzbehältern und Dosiereinrichtungen, die nur unter großem Aufwand wieder gereinigt werden können.

Wünschenswert wären also Isocyanatgruppen enthaltende Hotmeltsysteme mit erhöhter thermischer Stabilität, die über einen längeren Zeitraum bei hohen Temperaturen in der Schmelze gehalten werden können, ohne daß sie irreversibel in den Gelzustand übergehen bzw. stark in der Viskosität ansteigen.

Überraschend wurde nun gefunden, daß bei Verwendung bestimmter Polyisocyanate Hotmeltsysteme mit stark verbesserter Viskositätsstabilität erhalten werden, ohne daß die übrigen Eigenschaften absinken.

Gegenstand der vorliegenden Erfindung sind demnach Isocyanatgruppen enthaltende reaktive Hotmeltsysteme mit niedriger Anfangsviskosität und erhöhter Temperaturstabilität aus
(i) Hydroxypolyolen mit Ester- und/oder Ethergruppierungen der Hydroxylzahl 15 bis 150 und einer mittleren Funktionalität von 1,95 bis 2,2 und
(ii) Diphenylmethandiisocyanaten
in einem Verhältnis von Isocyanatgruppen in (ii) zu Hydroxylgruppen in (i) von 1,4:1 bis 2,5:1, die dadurch gekennzeichnet sind, daß Diphenylmethandiisocyanate mit einem Gehalt von mindestens 70 Gew.-% an 2,4'-Isomeren eingesetzt werden.

Bei den einzusetzenden Polyolen (i) handelt es sich um die gängigen in der Polyurethanchemie eingesetzten Hydroxylverbindungen, wie beispielsweise Polyetherpolyolen auf Basis von vorzugsweise bifunktionellen Startern, z.B. Propylenglykol oder 2,2-Bis-4-hydroxyphenylpropan, und Propylenoxid mit Hydroxylzahlen von vorzugsweise 20 bis 150. Anteilig (5 bis 20 Gew.-%, bezogen auf (i) können auch höherfunktionelle Polyole mitverwendet werden, wie beispielsweise Trimethylolpropan gestartete Propylenoxidpolyetherpolyole der Hydroxylzahl 30 bis 500. Bei der Mitverwendung höherfunktioneller Polyole kann die Hydroxylzahl bei den Hydroxypolyolen (i) auf einen Wert von 180, bevorzugt 160, steigen.

Die Verwendung von kristallinen oder amorphen Hydroxylpolyestern als Polyole (i) ist bevorzugt. Als kristalline Polyesterpolyole sind solche zu verstehen, die in der Differenzialthermoanalyse (DTA) oberhalb Raumtemperatur ein Endothermiemaximum aufweisen, als amorphe solche zu verstehen, die in der Differenzialthermoanalyse oberhalb Raumtemperaturen kein Endothermiemaximum aufweisen.

Als Polyesterpolyole mit Hydroxyzahlen 15 bis 100, bevorzugt 20 bis 75, kommen vorzugsweise Veresterungsprodukte der Adipinsäure, Dodecandisäure, der Ortho-, Iso- oder Terephthalsäure, der Kohlensäure oder der Dimerfettsäure (von durch Dimerisation von ungesättigten Fettsäure (z.B. Ölsäure) gewonnenen Polycarbonsäuren) mit Glykolen, wie beispielsweise Ethylenglykol, Butandiol-1,4 oder Hexandiol-1,6, in Betracht. Es können selbstverständlich auch Mischungen der Säuren und/oder Glykole eingesetzt werden. Ebenso ist die anteilige Mitverwendung von beispielsweise Trimethylolpropan möglich. Neben den oben erwähnten Dicarbonsäuren ist auch die Verwendung von Hydroxycapronsäure bzw. Caprolacton möglich.

Die Herstellung der Polyether- und Polyesterpolyole (i) ist bekannt und z.B. beschrieben in Ullmanns Encyklopädie der technischen Chemie, "Polyester", 4. Auflage, Verlag Chemie, Weinheim, 1980.

Als gegebenenfalls bei der Komponente (i) mitzuwendenden niedermolekularen Hydroxylverbindungen sind insbesondere Di-, Tri und/oder Tetraethylenglykol, 1,4-Dimethylolcyclohexan oder Trimethylolpropan oder Umsetzungsprodukte von 4,4'-Hydroxyphenylpropan mit Ethylen- und/oder Propylenoxid zu nennen. Für besondere Effekte können selbstverstandlich auch Diole mit Ionen und/oder ionengruppenbildenden Bausteinen, wie beispielsweise Dimethylolpropionsäure, N-Methyldiethanolamin und/oder Umsetzungsprodukte von Natriumbisulfit mit propoxyliertem Butendiol-1,4 eingesetzt werden. Die Menge an niedermolekularen Hydroxylverbindungen beträgt bevorzugt 0,01 bis 0,5 Mol pro Mol Komponente (i).

Die Polyesterpolyole und Polyetherpolyole (i) besitzen bevorzugt eine mittlere Funktionalität von 1,95 bis 2,05.

Erfindungsgemäß werden Diphenylmethandiisocyanate (ii) mit einem Gehalt von mindestens 70 Gew.-%, vorzugsweise von mindestens 85 Gew.-% an 2,4'-Isomeren verwendet.

Die Herstellung solcher Diphenylmethandiisocyanate (ii) kann nach verschiedenen Methoden erfolgen, wie beispielsweise der Destillation eines technischen Diphenylmethandiisocyanatgemisches.

Das Verhältnis von Hydroxylgruppen in den Polyolkomponenten (i) zu den Isocyanatgruppen in den Diisocyanaten (ii) beträgt vorzugsweise 1:1,5 bis 1:2,0.

Die Herstellung der Isocyanatgruppen enthaltenden Hotmeltsysteme erfolgt beispielsweise derart, daß die flüssigen Polyole mit einem Überschuß der Polyisocyanate vermischt werden und die homogene Mischung abgefüllt wird oder bis zum Erhalt eines konstanten NCO-Wertes, der meist nach zwei Stunden erreicht wird, gerührt wird und dann abgefüllt wird. Als Reaktionstemperatur werden 60 bis 150, vorzugsweise 65 bis 110°C gewählt. Selbstverständlich kann die Herstellung der reaktiven Hotmelts auch kontinuierlich in einer Rührkesselkaskade oder geeigneten Mischaggregaten, wie beispielsweise schnelldrehenden Mischern nach dem Rotor-Stator-Prinzip, erfolgen.

Es ist selbstverständlich möglich, die Polyester- und/oder Polyetherpolyole oder einen Teil derselben mit einem Unterschuß an Diisocyanaten, vorzugsweise Hexamethylendiisocynat, zu modifizieren und nach beendeter Reaktion die Urethangnippen-haltigen Polyole mit einem Überschuß von Diisocyanaten zu einem Isocyanatgruppen enthaltendem Hotmelt umzusetzen.

Ebenso ist es möglich, die Umsetzung der Polyole mit den Diisocyanaten in Gegenwart von bis zu 5 Gew.-% von beispielsweise Trimerisaten aliphatischer Diisocyanate, wie beispielsweise Hexamethylendiisocyanat, durchzuführen oder solche Trimerisate nach beendeter Prepolymerisierung zuzusetzen.

Die Hotmeltsysteme sind, wenn sie unter Feuchtigkeitsausschluß bei Raumtemperatur bis 40°C gelagert werden, fast unbegrenzt haltbar. Sie können mit anorganischen oder organischen Füllstoffen, Farbstoffen, Harzen und/oder Streckölen in üblicher Weise modifiziert werden und stellen hervorragende Klebstoffe dar.

Die Applikation erfolgt bei erhöhter Temperatur, wobei die Hotmeltsysteme kontinuierlich oder diskontinuierlich bei Temperaturen von 80 bis 160°C aufgeschmolzen werden und die Schmelze mit den zu verklebenden Substraten in Kontakt gebracht wird. Die Abbindung erfolgt zunächst physikalisch durch Ansteigen der Viskosität oder durch Rekristallisation der Polyestersegmente und später durch chemische Reaktion der Isocyanatgruppen mit Feuchtigkeit oder anderen zerewitinoff-aktiven Gruppen, z.B. mit Glykolen.

Normalerweise reicht die Substrat- und Luftfeuchtigkeit zur Anbindung aus, aber die Reaktion kann selbstverständlich durch zusätzliches Benebeln mit Wasser oder Glykolen oder Katalysatoren enthaltende Medien, wie Triethylamin enthaltenden Wasserdampf beschleunigt werden.

Hotmeltsysteme der beanspruchten Art zeichnen sich gegenüber Systemen auf Basis konventioneller Diphenylmethandiisocyanate in vergleichbaren molaren Zusammensetzungen durch eine niedrigere Viskosität sowie insbesondere bei Verwendung kristalliner Polyesterpolyole durch eine schnellere Kristallisation und damit raschere Anfangsverfestigung bzw. kürzere "offene Zeit", wie beispielsweise in DE 3 931 845 beschrieben, aus. Vor allem aber ist die thermische Stabilität der Systeme deutlich verbessert und stellt somit einen technischen Fortschritt dar, der die Klasse solcher Hotmeltklebstoffe noch attraktiver macht. Jetzt ist auch die Herstellung von Isocyanatgruppen enthaltenden Hotmelts auf Basis sehr hochviskoser Polyesterpolyole möglich, die trotz der erforderlichen hohen Verarbeitungstemperaturen ohne den bisher bei der Verarbeitung sehr störenden, starken Viskositätsaufbau eingesetzt werden können. Somit werden insbesondere stark verbesserte, reaktive Hotmeltklebstoffe für die Schlauchbeleimung von Kreuzbodenventilsäcken zugänglich. Sie lösen das bislang vorhandene Problem, welches in der für eine störungsfreie Produktion erfoderlichen Kombination sich eigentlich gegenseitig ausschließender Eigenschaften besteht, nämlich eine sehr hohe Viskosität bzw. Abriebfestigkeit des aufgetragenen Klebefilms zu Verbindungen mit einer guten Viskositätsstabilität des im Aufschmelzbehälter und im Auftragwerk bei sehr hohen Temperaturen vorliegenden Klebstoffs.

In gleicher Weise ist auch die Herstellung technisch verbesserter Reaktionshotmelt-Klebstoffe für die Verbundfolienherstellung möglich.

Die erfindungsgemäßen Hotmeltsysteme können als Klebstoffe vielfältig eingesetzt werden, beispielsweise als Montageklebstoff zur vorläufigen Fixierung von Bauteilen, als Buchbindeklebstoff oder Klebstoffe für die Herstellung von Kreuzbodenventilsäcken, Verbundfolien oder Laminaten.

### Beispiele

### Polyesterpolyole

- A-1: Kristalliner Hydroxylpolyester aus Adipinsäure und Hexandiol-1,6: Hydroxyzahl 28,0, Säurezahl 0,6, mittlere Funktionalität 2,0
- A-2: Amorpher Hydroxylpolyester aus Neopentylglykol und einem Gemisch von Adipinsäure und Isophthalsäure im molaren Verhältnis 6:4: Hydroxyzahl 56,2, Säurezahl 0,7, mittlere Funktionalität 2,0
- A-3: Amorpher Hydroxylpolyester Dynacoll 7210 der Hüls AG mit Hydroxyzahl 33 und mittlerer Funktionalität 2,0
- A-4: Amorpher Hydroxylpolyester Dynacoll 7110 der Hüls AG mit Hydroxyzahl 52 und mittlerer Funktionalität 2,0

### Diisocyanate

- C-1: Diisocyanatodiphenylmethangemisch mit 87,1 % 2,4'-, 11,2 % 4,4'- und 1,7 % 2,2'-Isomeren.
- C-1A: Diisocyanatodiphenylmethangemisch mit 77,0 %, 2,4'-, 22 % 4,4'- und 1 % 2,2'-Isomeren
- C-2: 4,4'-Diisocyanatodiphenylmethan (100 %ig)

### Herstellung der Prepolymeren

Die geschmolzenen Polyole wurden 60 Minuten lang bei 100°C und ca. 20 mbar unter Rühren entwässert.

Bei ca. 80 bis 90°C wurde das Diisocyanat zugegeben und bis zur Konstanz des Isocyanatgehaltes unter Stickstoff gerührt.

Das Prepolymer wurde in Kartuschen abgefüllt.

### Untersuchung der Hotmeltsysteme

Nach zweiwöchiger Lagerung bei Raumtemperatur wurden die Kartuschen für 60 Minuten bei 130 bis 140°C im Wärmeschrank aufgeschmolzen.

Von dem flüssigen Prepolymer wurde der Isocyanatgehalt durch Titration mit Dibutylamin bestimmt.

Das flüssige Hotmelt wurde auf Buchenholzprobekörper aufgetragen und die Aushärtecharakteristik aufgeteilt in eine Benetzungsphase A (Sekunden) und Kristallisationsphase B (Sekunden) mit dem "CUREM" (siehe DE 3 931 845) bestimmt (siehe Tabelle 2). Hierzu wird der Klebstoff im Fügespalt der zu verklebenden Materialien einer sinusförmigen Wechselschubbeanspruchung unterworfen und die dabei auftretenden Schubkräfte fortlaufend gemessen. Die gemessenen Schubkräfte werden als Funktion der Zeit (in Sekunden) dargestellt. Die Schuberzeugung erfolgt über einen Frequenz-gesteuerten Schubmotor und eine feine Gewindespindel. Die Wegamplitude beträgt 200 µm, die Belastungsfrequenz 1 Hz. Der Fügespalt beträgt 0,2 mm, die Temperierung der Probenklemmbacken ist auf 20 bis ±2°C eingestellt. Die Meßwertregistrierung läuft über 10 Minuten.

Die Trennfestigkeit wurde mit Buchenholzprobekörpern ermittelt (nach 24 Stunden und nach 7 Tagen) [siehe Tabelle 2].

### Prüfung der Lagerstabilität (Tabelle 3)

Die Hotmeltsysteme wurden in Aluminiumkartuschen bei 120°C aufgeschmolzen und über 24 Stunden bzw. 72 Stunden gelagert. Bei einer Schergeschwindigkeit von D = 50 1/s wurden die Viskositäten bei 120°C mit einem Kegel/Platte-Viskosimeter MC-10 (Fa. Physika) ermittelt.

**Tabelle 1**

| | (Mol) Pol-A | Mol TMP* | (Mol) Diiso. C | NCO/OH | % NCO |
|---|---|---|---|---|---|
| 1 | 1,0 A-1 | / | 1,9 C-1 | 1,9 | 1,69 |
| 1 A | 1,0 A-1 | / | 1,9 C-2 | 1,9 | 1,59 |
| 2 | 1,0 A-1 | 0,25 | 2,61 C-1 | 1,9 | 1,99 |
| 2 A | 1,0 A-1 | 0,25 | 2,61 C-2 | 1,9 | 2,00 |
| 3 | 1,0 A-1 | 0,1 | 2,12 C-1 | 1,85 | 1,53 |
| 3 A | 1,0 A-1 | 0,1 | 2,12 C-2 | 1,85 | 1,51 |
| 4 | 1,0 A-2 | / | 2,0 C-1 | 2,0 | 3,59 |
| 4 A | 1,0 A-2 | / | 2,0 C-2 | 2,0 | 3,54 |
| 5 | 1,0 A-1 | 0,1 | 2,19 C-1 | 1,9 | 1,74 |
| 5 A | 1,0 A-1 | 0,1 | 2,19 C-2 | 1,9 | 1,69 |
| 6 | 1,0 A-1 | 0,25 | 2,47 C-1 | 1,8 | 1,72 |
| 6 A | 1,0 A-1 | 0,25 | 2,47 C-2 | 1,8 | 1,62 |
| 7 | 1,0 A-3 | / | 2,0 C-1 A | 2,0 | 2,06 |
| 7 A | 1,0 A-3 | / | 2,0 C-2 | 2.0 | 2,19 |
| 8 | 1,0 A-4 | / | 2,0 C-1 A | 2,0 | 3,24 |
| 8 A | 1,0 A-4 | / | 2,0 C-2 | 2,0 | 3,29 |

| | | | | | |
|---|---|---|---|---|---|
| *TMP = Trimethylolpropan | | | | | |

**Tabelle 2**

| | Benetzung | Kristallisation | Festigkeiten in N/mm² | |
|---|---|---|---|---|
| | (Sek.) | (Sek.) | nach 24 h | 7 Tagen |
| 1 | 25 | 75 | 5,0 | 12,6 |
| 1 A | 65 | 120 | 8,1 | 15,0 |
| 2 | 60 | 85 | 6,0 | 14,6 |
| 2 A | 100 | 150 | 8,3 | 15,1 |
| 3 | 45 | 70 | / | / |
| 3 A | 70 | 115 | / | / |
| 5 | / | / | 5,0 | 13,0 |
| 5 A | / | / | 8,9 | 14,8 |
| 7 | / | / | 0,2 | 3,4 |
| 7 A | / | / | 1,8 | 3,8 |
| 8 | / | / | 2,0 | 3,1 |
| 8 A | / | / | 1,8 | 8,2 |

Bei den mit A bezeichneten Versuchen handelt es sich jeweils um Vergleichsversuche. Man erkennt deutlich die raschere Anfangsverfestigung der erfindungsgemäßen Hotmeltsysteme auf Basis kristalliner Systeme (Beispiele 1-3).

**Tabelle 3**

| Klebstoff | Viskosität (Pas) bei 120°C nach Lagerung über | | |
|---|---|---|---|
| | 0 h | 24 h | 72 h |
| 1 | 9,0 | / | / |
| 1 A | 22,0 | / | / |
| 2 | 5,0 | 16,0 | 28,0 |
| 2 A | 15,0 | 145,0 | 596,0 |
| 3 | 13,0 | / | / |
| 3 A | 35,0 | / | / |
| 4 | 2,8 | 6,1 | 13,4 |
| 4 A | 4,4 | 13,3 | 67,9 |
| 5 | 6,0 | 12,0 | 20,0 |
| 5 A | 19,0 | 80,0 | 242,0 |
| 6 | 6,8 | 17,5 | 72,0 |
| 6 A | 24,0 | 240,0 | vernetzt |
| 7 | 5,0 | 7,6 | 12,0 |
| 7 A | 7,8 | 18,0 | 58,0 |
| 8 | 6,7 | 17,0 | 64,0 |
| 8 A | 8,5 | 16,0 | vernetzt |

Man erkennt deutlich die niedrigere Anfangsviskosität und den geringeren Viskositätsanstieg über die Lagerzeit bei erhöhter Temperatur bei den erfindungsgemäßen Hotmeltsystemen.

## Patentansprüche

1. Isocyanatgruppen enthaltende, reaktive Hotmeltsysteme mit niedriger Anfangsviskosität und erhöhter Temperaturstabilität aus
(i) Hydroxypolyolen mit Ester- und/oder Ethergruppierungen der Hydroxylzahl 15 bis 150 und einer mittleren Funktionalität von 1,95 bis 2,2 und
(ii) Diphenylmethandiisocyanaten
in einem Verhältnis der Isocyanatgruppen in (ii) zu Hydroxylgruppen in (i) von 1,4:1 bis 2,5:1, dadurch gekennzeichnet, daß Diphenylmethandiisocyanate mit einem Gehalt von mindestens 70 Gew.-% an 2,4'-Isomeren eingesetzt werden.

2. Isocyanatgruppen enthaltende reaktive Hotmeltsysteme nach Anspruch 1, dadurch gekennzeichnet, daß kristalline Hydroxypolyesterpolyole als Komponente (i) eingesetzt werden.

3. Isocyanatgruppen enthaltende reaktive Hotmeltsysteme nach Anspruch 1, dadurch gekennzeichnet, daß amorphe Hydroxypolyesterpolyole als Komponente (i) eingesetzt werden.

4. Isocyanatgruppen enthaltende reaktive Hotmeltsysteme nach Ansprüchen 1 bis 3, dadurch gekennzeichnet, daß als Komponente (ii) Diphenylmethandiisocyanate mit einem 2,4'-Isomerengehalt von über 85 Gew.-% eingesetzt werden.
